# DEMANDE DE BREVET EUROPEEN

(11) **EP 3 159 747 A1**
(43) Date de publication de la demande: **26.04.2017**
(21) Numéro de dépôt: 15191113.8
(22) Date de dépôt: 22.10.2015
(51) Int. Cl.: G04B 17/06, G04B 17/20, F16F 1/04, F16F 1/10

(54) **SPIRAL A ENCOMBREMENT REDUIT A SECTION CONSTANTE**

(71) Demandeur: ETA SA Manufacture Horlogère Suisse, 2540 Grenchen (CH)
(72) Inventeur: Helfer, Jean-Luc, 2525 Le Landeron (CH); Cosandier, Yves-Alain, 1020 Renens (CH)
(74) Mandataire: Goulette, Ludivine

(57) **Abrégé**

L'invention se rapporte à un spiral monobloc (1) comportant une lame (3) unique enroulée sur elle-même entre une spire interne et une spire externe, la lame (3) comprenant une géométrie permettant que le spiral (1), lorsqu'il est en contraction à une valeur de 360 degrés, ait un éloignement constant entre chaque spire de la spire interne à la pénultième spire.

## Description

### Domaine de l'invention

L'invention se rapporte à un spiral à encombrement réduit et, plus particulièrement, un tel spiral destiné à coopérer avec un balancier pour former un résonateur.

### Arrière-plan de l'invention

Le prix d'un spiral en silicium est sensiblement proportionnel à sa surface, à savoir plus on arrive à graver de spiraux sur une même plaquette, plus bas est le prix d'un spiral à l'unité.

Il n'est toutefois pas possible de diminuer l'encombrement au hasard car les spires d'un spiral ne doivent pas se toucher aussi bien en contraction et qu'en expansion.

### Résumé de l'invention

Le but de la présente invention est de pallier tout ou partie les inconvénients cités précédemment en proposant un spiral à encombrement réduit tout en garantissant que ses spires ne se touchent pas aussi bien en contraction qu'en expansion.

A cet effet, l'invention se rapporte à un spiral monobloc comportant une lame unique enroulée sur elle-même entre une spire interne et une spire externe, la lame au repos comprenant entre l'extrémité de la spire interne et la deuxième spire, une première zone dans laquelle le pas diminue, une deuxième zone, en prolongement de la première zone, dans laquelle le pas entre chaque spire augmente continument afin que le spiral, lorsqu'il est en contraction à une valeur de 360 degrés, ait un éloignement constant entre chaque spire de la spire interne à la pénultième spire.

Avantageusement selon l'invention, on comprend que l'encombrement du spiral est réduit au maximum tout en garantissant un éloignement constant minimal entre les spires en contraction et, éventuellement, également en expansion. On peut donc chercher à minimiser la taille du spiral, sans pour autant perdre en propriétés chronométriques. Un tel spiral permet d'optimiser le nombre de spiraux qui seront gravés sur une même plaquette afin d'en réduire le coût unitaire.

Conformément à d'autres variantes avantageuses de l'invention :
- dans la deuxième zone, le pas entre chaque spire augmente continument selon une valeur constante ;
- la deuxième zone comporte une section constante ;
- la première zone comporte une section qui diminue entre l'extrémité de la spire interne et sa jonction avec la deuxième zone ;
- le spiral comporte une troisième zone, en prolongement de la deuxième zone et comprise entre le début de la pénultième spire et l'extrémité de la spire externe, dans laquelle le pas augmente continument afin que le spiral, lorsqu'il est en expansion à une valeur de 360 degrés, ait un éloignement minimal entre la pénultième spire et la spire externe pour éviter leur contact ;
- dans la troisième zone, le pas augmente continument selon une valeur constante ;
- la troisième zone comporte une première partie dont la section est sensiblement identique à celle de la deuxième zone et une deuxième partie, en prolongement de la première partie, dont la section augmente en se rapprochant de l'extrémité de la spire externe ;
- le spiral est à base de silicium ;

De plus, l'invention se rapporte à un résonateur caractérisé en ce qu'il comporte un balancier coopérant avec un spiral selon l'une des variantes précédentes.

### Description sommaire des dessins

D'autres particularités et avantages ressortiront clairement de la description qui en est faite ci-après, à titre indicatif et nullement limitatif, en référence aux dessins annexés, dans lesquels :
- la figure 1 est une vue de dessus en contraction d'un spiral selon l'invention ;
- la figure 2 est une vue de dessus au repos d'un spiral selon l'invention ;
- la figure 3 est une vue de dessus en expansion d'un spiral selon l'invention ;
- la figure 4 est un graphique représentant l'évolution du pas entre les spires en fonction du nombre de spire du spiral ;
- la figure 5 est un graphique représentant l'évolution de l'épaisseur des spires en fonction du nombre de spire du spiral ;
- la figure 6 est un graphique représentant l'évolution de l'éloignement entre spires en fonction du nombre de spire du spiral et du mouvement du spiral.

### Description détaillée des modes de réalisation préférés

L'invention se rapporte à un spiral à encombrement réduit destiné à coopérer avec un balancier pour former un résonateur du type balancier - spiral pour une pièce d'horlogerie.

Le développement de la présente invention a été initié pour fabriquer un maximum de spiraux sur une même plaquette à base de silicium tout en garantissant que les spires de chaque spiral ne se touchent pas aussi bien en contraction qu'en expansion. Toutefois, on comprend que le spiral ne saurait se limiter à un matériau à base de silicium. De manière non limitative, on comprend qu'une même logique est applicable à un spiral formé à partir d'un procédé LIGA, c'est-à-dire à base d'un matériau électriquement conducteur.

Les termes à base de silicium signifient un matériau comportant du silicium monocristallin, du silicium monocristallin dopé, du silicium polycristallin, du silicium polycristallin dopé, du silicium poreux, de l'oxyde de silicium, du quartz, de la silice, du nitrure de silicium ou du carbure de silicium. Bien entendu, quand le matériau à base de silicium est sous phase cristalline, n'importe quelle orientation cristalline peut être utilisée.

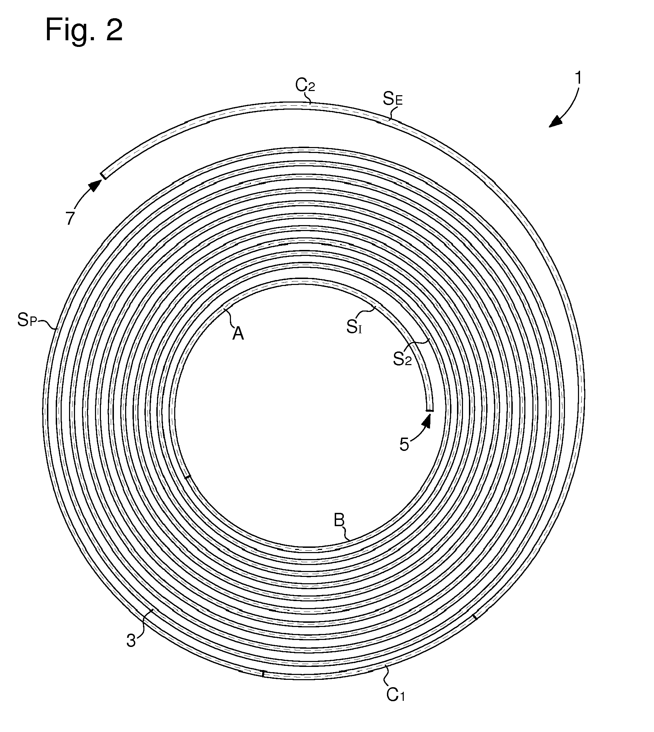

Comme illustré à la figure 2, l'invention se rapporte ainsi à un spiral 1 monobloc comportant une lame 3 unique enroulée sur elle-même entre une spire interne S_{I} et une spire externe S_{E}. Selon l'invention, la lame 3 du spiral 1, dans sa position de repos de la figure 2, comprend entre l'extrémité 5 de la spire interne S_{I} et la deuxième spire S₂, une première zone A dans laquelle le pas entre la spire interne S_{I} et la deuxième spire S₂ diminue.

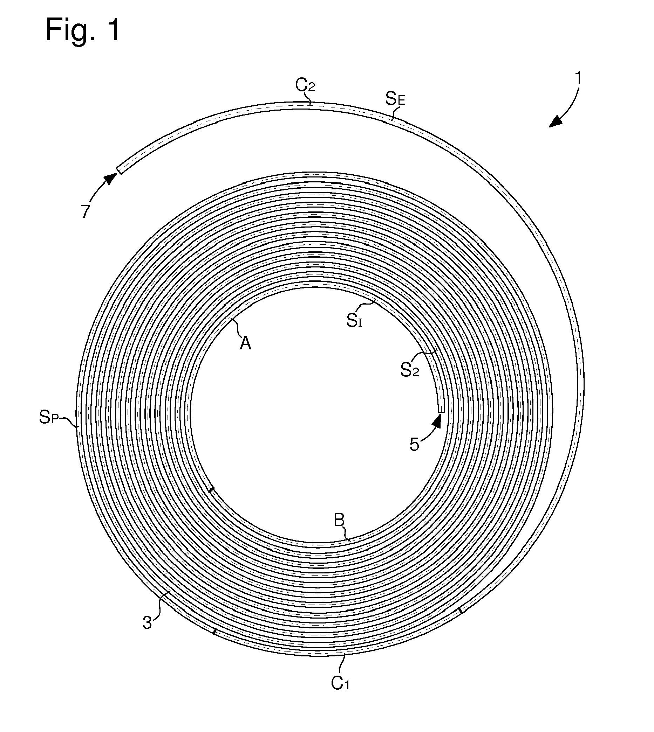

De manière avantageuse, le spiral 1 comporte, en prolongement de la première zone A, une deuxième zone B, dans laquelle le pas entre chaque spire augmente continument afin que le spiral 1, lorsqu'il est en contraction, c'est-à-dire lorsque l'extrémité 5 de la spire interne S_{I} a effectué une rotation de sensiblement à -360 degrés par rapport au centre du spiral 1, comme visible à la figure 1, ait un éloignement sensiblement constant entre chaque spire de la spire interne S_{I} à la pénultième spire S_{P}.

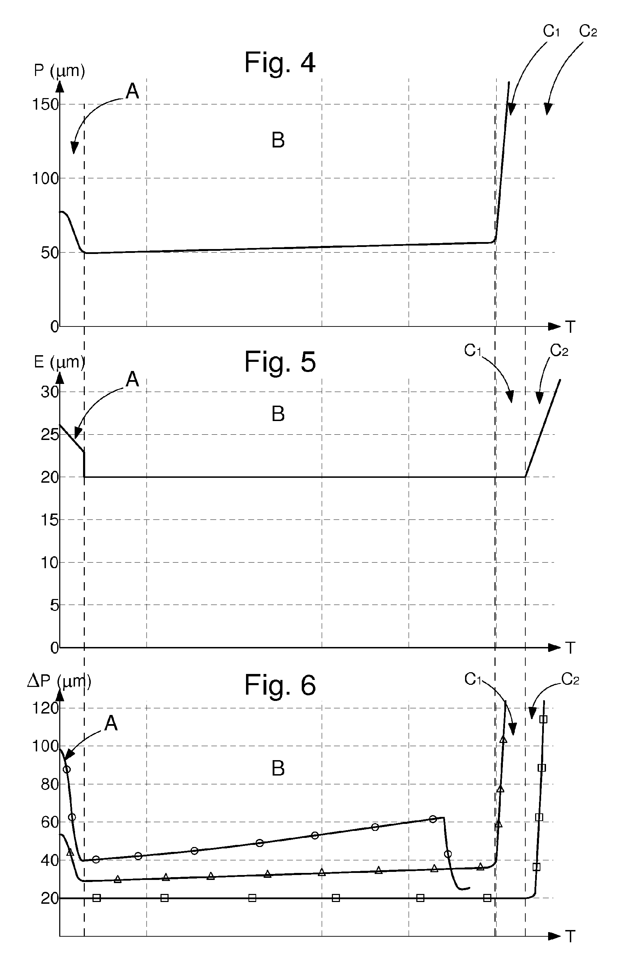

De manière préférée, comme illustré à la figure 4, le pas entre chaque spire augmente continument selon une valeur constante dans la deuxième zone B. De plus, préférentiellement selon l'invention, la deuxième zone B comporte une section constante. Ainsi, à titre d'exemple, la section constante peut comporter une épaisseur constante comprise entre 10 et 50 *µ*m et une hauteur constante comprise entre 50 *µ*m et 250 *µ*m.

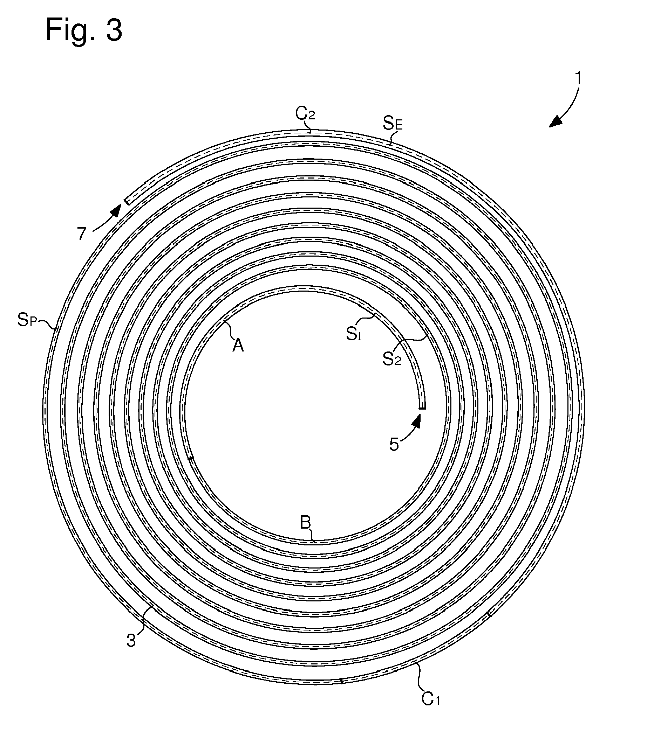

Selon une caractéristique optionnelle supplémentaire, le spiral comporte, avantageusement selon l'invention, une troisième zone C, en prolongement de la deuxième zone B et comprise entre le début de la pénultième spire S_{P} et l'extrémité 7 de la spire externe S_{E}, dans laquelle le pas, entre la pénultième spire S_{P} et la spire externe S_{E}, augmente continument afin que le spiral 1, lorsqu'il est en expansion, c'est-à-dire lorsque l'extrémité 5 de la spire interne S_{I} a effectué une rotation de sensiblement à +360 degrés par rapport au centre du spiral 1, comme visible à la figure 3, ait un éloignement minimal entre la pénultième spire S_{P} et la spire externe S_{E} pour éviter le contact notamment entre la pénultième spire S_{P} et la spire externe S_{E}.

De manière préférée, comme illustré à la figure 4, le pas entre chaque spire augmente continument selon une deuxième valeur constante dans la troisième zone C. Comme visible à la figure 4, la deuxième valeur constante est préférentiellement supérieure à la première valeur constante de la deuxième zone B. De plus, préférentiellement selon l'invention, la troisième zone C comporte une première partie C₁ avec une épaisseur sensiblement identique à celle de la deuxième zone B puis une deuxième partie C₂ dans laquelle l'épaisseur augmente continument.

Un premier graphique représentant l'évolution du pas entre les spires en fonction du nombre de spire du spiral est illustré à la figure 4. On peut voir que, dans la première zone A du spiral 1, le pas diminue de manière sensiblement constante jusqu'au début de la deuxième zone B. A la figure 4, on peut voir que la deuxième zone B comporte une augmentation constante du pas jusqu'à la troisième zone C. Cette dernière C comporte une augmentation constante du pas jusqu'à l'extrémité 7 de la spire externe S_{E}. Comme visible à la figure 4, l'augmentation constante du pas de la troisième zone C est beaucoup plus prononcée que celle de la zone B.

De manière complémentaire, un deuxième graphique représentant l'évolution de l'épaisseur des spires en fonction du nombre de spire du spiral est illustré à la figure 5. On peut voir que, dans la première zone A du spiral 1, l'épaisseur diminue jusqu'au début de la deuxième zone B. A la figure 5, on peut voir que la deuxième zone B comporte une épaisseur constante jusqu'à la troisième zone C. Cette dernière C comporte une première partie C₁ dont l'épaisseur reste constante et une deuxième partie C₂, en prolongement de la première partie C₁, dont l'épaisseur augmente en se rapprochant de l'extrémité 7 de la spire externe S_{E}.

Enfin, un graphique représentant l'évolution ΔP de l'éloignement entre spires en fonction du nombre de spire du spiral est illustré à la figure 6. Plus précisément, l'éloignement ΔP des spires est illustré pour le spiral dans son état en contraction de la figure 1 (courbe annotée en carré □), dans son état au repos de la figure 2 (courbe annotée en triangle Δ) et, dans son état en expansion de la figure 3 (courbe annotée en cercle ○).

Par conséquent, en état d'expansion annoté en cercle (○), on peut voir que, dans la première zone A du spiral 1, l'éloignement ΔP entre les spires diminue jusqu'au début de la deuxième zone B. On remarque, ensuite, que les deuxième et troisième zones B et C comporte un éloignement ΔP entre les spires qui augmente continument jusqu'à ce que le point de pitonnage fixe de l'extrémité 7 ramène l'éloignement entre les spires à une valeur minimale.

De manière logique puisque dans son état au repos, la courbe annotée en triangle Δ à la figure 6 est identique à la courbe de la figure 2. Enfin, en état de contraction annoté en carré (□), on peut voir que, dans les première et deuxième zones A et B du spiral 1, l'éloignement ΔP entre les spires est avantageusement constante et égale à une valeur minimale. On remarque, ensuite, que la troisième zone C comporte une augmentation continue de l'éloignement ΔP entre les spires en se rapprochant de l'extrémité 7 de la spire externe S_{E}.

A la figure 6, on remarque que les valeurs minimales des courbes en cercle (○) et en carré (□) ne sont pas identiques. Toutefois, elles pourraient être rendues géométriquement identiques.

De même, les valeurs décrites dans les figures 4 à 6 sont utilisés uniquement à titre d'exemple. Ainsi, suivant les configurations du spiral et/ou du résonateur auquel il appartient, la valeur minimale choisie pourrait être différente des 20 micromètres choisis comme exemple à la figure 6. On comprend donc que chaque valeur minimale des courbes en cercle (○) et en carré (□) pourrait être choisie inférieure ou supérieure à 20 micromètres.

Avantageusement selon l'invention, on comprend toutefois que ces caractéristiques particulières du spiral 1 autorisent un encombrement du spiral au repos qui est réduit au maximum tout en garantissant un éloignement constant minimal entre les spires en contraction et, éventuellement, également en expansion. On peut donc minimiser la taille du spiral sans pour autant perdre en propriétés chronométriques. Un tel spiral selon l'invention permet d'optimiser le nombre de spiraux qui seront gravés sur une même plaquette afin d'en réduire le coût unitaire.

Bien entendu, la présente invention ne se limite pas à l'exemple illustré mais est susceptible de diverses variantes et modifications qui apparaîtront à l'homme de l'art. En particulier, la géométrie, c'est-à-dire les variations de pas, de section comme par exemple l'épaisseur et le nombre de spires, peut varier suivant les applications prévues.

A titre d'exemple, il pourrait être envisagé de manière additionnelle de réduire le nombre de spires pour encore d'avantage diminuer l'encombrement du spiral.

Il est également clair que l'angle de 360 degrés en contraction ou en expansion pourrait être plus faible sans sortir du cadre de l'invention. En effet, cet angle a été choisi car mécaniquement cet angle ne peut théoriquement pas être dépassé. Toutefois, l'importance n'est pas pour quel angle l'éloignement est minimal mais plutôt d'être sûr que l'éloignement minimal ne soit jamais dépassé. On comprend donc que l'angle pourrait être choisi volontairement plus bas car, suivant la configuration du mouvement, il est clair que cet angle ne sera pas dépassé en fonctionnement normal.

De plus, les valeurs en ordonnées de la figure 4, ne sont nullement limitatives. Ainsi, suivant la section de la deuxième zone B, le pas maximal de la première zone A et/ou de la troisième zone C peuvent varier. On comprend donc que seules les variations de pas sont conservées mais pas forcément selon les mêmes valeurs minimales et/ou maximales.

De manière similaire, les valeurs en ordonnées de la figure 5, ne sont nullement limitatives. Ainsi, suivant l'épaisseur de la deuxième zone B, l'épaisseur maximale de la première zone A et/ou de la troisième zone C peuvent varier. On comprend donc que seules les variations d'épaisseur sont conservées mais pas forcément selon les mêmes valeurs minimales et/ou maximales.

Enfin, même si les calculs ont été effectués à partir de la variation de l'épaisseur, il est bien évident que la variation doit être comprise comme une variation de section, c'est-à-dire de la hauteur et/ou de l'épaisseur de la lame du spiral.

## Revendications

1. Spiral (1) monobloc comportant une lame (3) unique enroulée sur elle-même entre une spire interne (S_{I}) et une spire externe (SE), la lame (3) au repos comprenant entre l'extrémité de la spire interne (S_{I}) et la deuxième spire (S₂), une première zone (A) dans laquelle le pas diminue, une deuxième zone (B), en prolongement de la première zone (A), dans laquelle le pas entre chaque spire augmente continument afin que le spiral (1), lorsqu'il est en contraction à une valeur de 360 degrés, ait un éloignement constant entre chaque spire de la spire interne (S_{I}) à la pénultième spire (S_{P}).

2. Spiral (1) selon la revendication précédente, **caractérisé en ce que**, dans la deuxième zone (B), le pas entre chaque spire augmente continument selon une valeur constante.

3. Spiral (1) selon la revendication 1 ou 2, **caractérisé en ce que** la deuxième zone (B) comporte une section constante.

4. Spiral (1) selon l'une des revendications précédentes, **caractérisé en ce que** la première zone (A) comporte une section qui diminue entre l'extrémité (5) de la spire interne (S_{I}) et sa jonction avec la deuxième zone (B).

5. Spiral (1) selon l'une des revendications précédentes, **caractérisé en ce que** le spiral (1) comporte une troisième zone (C), en prolongement de la deuxième zone (B) et comprise entre le début de la pénultième spire (S_{P}) et l'extrémité (7) de la spire externe (SE), dans laquelle le pas augmente continument afin que le spiral (1), lorsqu'il est en expansion à une valeur de 360 degrés, ait un éloignement minimal entre la pénultième spire (S_{P}) et la spire externe (SE) pour éviter leur contact.

6. Spiral (1) selon la revendication précédente, **caractérisé en ce que**, dans la troisième zone (C), le pas augmente continument selon une valeur constante.

7. Spiral (1) selon la revendication précédente, **caractérisé en ce que** la troisième zone (C) comporte une première partie (C₁) dont la section est sensiblement identique à celle de la deuxième zone (B) et une deuxième partie (C₂), en prolongement de la première partie (C₁), dont la section augmente en se rapprochant de l'extrémité (7) de la spire externe (S_{E}).

8. Spiral (1) selon l'une des revendications précédentes, **caractérisé en ce que** le spiral (1) est à base de silicium.

9. Résonateur **caractérisé en ce que** le résonateur comporte un balancier coopérant avec un spiral (1) selon l'une des revendications précédentes.
